# FASCICULE DE BREVET EUROPEEN

(11) **EP 1 174 747 B1**
(45) Date de publication et mention de la délivrance du brevet: **10.09.2008**
(21) Numéro de dépôt: 01401800.6
(22) Date de dépôt: 05.07.2001
(51) Int. Cl.: G02B 6/44, G02B 6/36

(54) **Support pour éléments filiformes de faible diamètre et faisceau d'éléments filiformes reliés entre eux par ce support**
Halter für fadenförmige Körper mit kleinem Durchmesser und Bündel von fadenförmigen Körpern, welche durch diesen Halter miteinander verbunden sind
Support for wirelike elements having small diameter and bundle of wirelike elements connected to one another by this support

(30) Priorité: 13.07.2000 FR 0009201
(43) Date de publication de la demande: 23.01.2002
(73) Titulaire: Draka Comteq B.V., 1083 HJ Amsterdam (NL)
(72) Inventeur: Galaj, Stanislas, 94110 Arcueil (FR); Vanpoulle, Sophie, 91190 Gif sur Yvette (FR); Andrieu, Xavier, 91220 Bretigny sur Orge (FR)
(74) Mandataire: Blokland, Arie

(56) Documents cités:
- EP-A- 0 019 026
- WO-A-96/38752
- DE-C- 4 405 066
- JP-A- 53 056 043

## Description

La présente invention concerne un support pour éléments filiformes de faible diamètre et un faisceau d'éléments filiformes reliés entre eux par ce support.

Elle s'applique en particulier aux installations comprenant des faisceaux de fibres optiques ou de câbles électriques coaxiaux de faible diamètre.

Parmi les fibres optiques utilisées habituellement dans un réseau de télécommunications câblé, on distingue habituellement les fibres optiques minérales, généralement en silice, et les fibres optiques en matière synthétique.

Une fibre optique minérale comprend généralement un coeur en silice dopée revêtu d'une gaine minérale intermédiaire et d'une gaine organique périphérique en matière synthétique. Cette gaine périphérique est constituée généralement d'une première gaine souple revêtue d'une seconde gaine dure. Une fibre optique de ce type a couramment un diamètre de 250 micromètres.

Une fibre optique en matière synthétique est habituellement plus grosse qu'une fibre optique minérale. Le diamètre courant d'une fibre optique en matière synthétique est habituellement de 500 micromètres et peut atteindre, dans certains cas, 1 millimètre.

Il est connu dans l'état de la technique de relier plusieurs fibres optiques entre elles au moyen d'un ruban en résine photopolymérisable. Habituellement, un ruban de ce type permet de relier deux à seize fibres optiques. De façon classique, les fibres optiques à relier sont enduites de résine liquide, cette dernière étant durcie par polymérisation en l'exposant à des rayons ultraviolets.

Les différentes fibres optiques d'un faisceau sont habituellement repérées par un code de couleur. De ce fait, le ruban en résine dans lequel sont noyées les fibres optiques est généralement transparent, de façon à permettre à un opérateur d'identifier chaque fibre optique à partir de sa couleur.

Si un opérateur souhaite accéder à une fibre optique particulière noyée dans le ruban, il doit déchirer ce dernier, éventuellement au moyen d'un fil prévu à cet effet dans le ruban. Après l'intervention de l'opérateur, la déchirure du ruban doit être réparée.

Par ailleurs, la polymérisation de la résine du ruban est une réaction exothermique susceptible d'engendrer des contraintes thermiques nuisibles dans les fibres optiques entourées par la résine.

Les documents EP 0019026 A1 et WO 96/3875 décrivent des supports pour éléments filiformes comprenant des canaux longitudinaux, chaque canal étant délimité par deux parois longitudinales reliées entre elles par une âme.

L'invention a pour but de relier des éléments filiformes de faible diamètre, tels que des fibres optiques ou des câbles électriques coaxiaux, à l'aide de moyens permettant de faciliter l'accès à chaque élément filiforme et, le cas échéant, le repérage des différents faisceaux et éléments filiformes.

A cet effet, l'invention a pour objet un support pour éléments filiformes de faible diamètre inférieur ou égal à 1 millimètre, notamment des fibres optiques et/ou des câbles électriques coaxiaux, **caractérisé en ce qu**'il comprend des canaux longitudinaux destinés à loger chacun un élément filiforme, chaque canal étant délimité par deux parois longitudinales reliées entre elles par une âme et délimitant une ouverture longitudinale du canal, la largeur de cette ouverture longitudinale variant par déformation élastique des parois longitudinales entre une configuration d'accès au canal autorisant le passage d'un élément filiforme à travers cette ouverture et une configuration de retenue d'un élément filiforme dans le canal.

Suivant d'autres caractéristiques de ce support:
- les ouvertures longitudinales des canaux successifs débouchent alternativement dans des faces opposées du support, les âmes des canaux alternant avec les parois longitudinales de ces canaux de façon à délimiter une section transversale du support en boustrophédon ;
- les canaux longitudinaux ont chacun une section transversale sensiblement triangulaire lorsque leur ouverture longitudinale est en configuration de retenue ;
- les ouvertures longitudinales des canaux successifs débouchent dans une même face du support ;
- les parois latérales comportent chacune un bord libre muni d'un bourrelet de retenue des éléments filiformes dans les canaux ;
- la face du support dans laquelle débouchent les ouvertures longitudinales des canaux est munie d'un couvercle d'obturation des canaux amovible ;
- le support est fabriqué dans une matière thermoplastique extrudée ou calandrée.

L'invention a également pour objet un ensemble d'au moins deux supports chacun tel que défini précédemment **caractérisé en ce que** chaque support comprend une paroi longitudinale délimitant un bord latéral du support munie de moyens d'accrochage destinés à coopérer avec des moyens d'accrochage complémentaires portés par un autre support.

Suivant une autre caractéristique de cet ensemble les moyens d'accrochage complémentaires des deux supports coopèrent entre eux par encliquetage.

L'invention a encore pour objet un faisceau d'éléments filiformes de faible diamètre inférieur ou égal à 1 millimètre, **caractérisé en ce que** les éléments filiformes sont reliés entre eux par un support tel que défini ci-dessus.

Suivant une autre caractéristique de ce faisceau les éléments filiformes sont choisis parmi les fibres optiques et les câbles électriques coaxiaux.

L'invention sera mieux comprise à la lecture de la description qui va suivre, donnée uniquement à titre d'exemple et faite en se référant aux dessins annexés dans lesquels :
- les figures 1 et 2 sont des vues schématiques en coupe transversale d'un support pour éléments filiformes, selon un premier mode de réalisation de l'invention, dans lesquelles chaque ouverture longitudinale d'un canal est respectivement dans une configuration d'accès à ce canal et dans une configuration de retenue d'un élément filiforme dans ce canal ;
- la figure 3 est une vue schématique en coupe transversale d'un support pour élément filiforme selon un second mode de réalisation de l'invention.

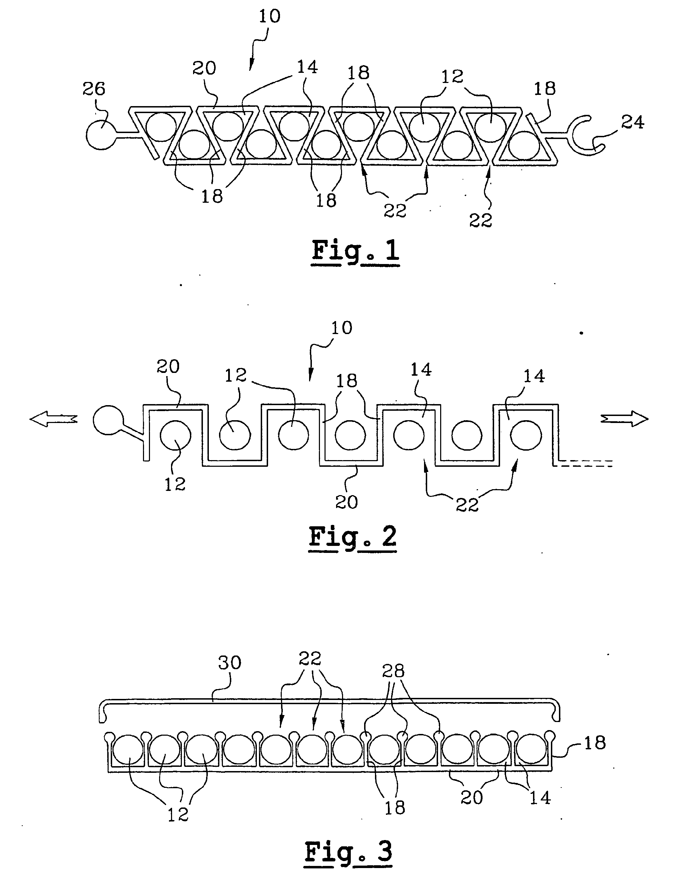

On a représenté sur les figures 1 et 2 un support 10 selon un premier mode de réalisation de l'invention pour des éléments filiformes 12 de faible diamètre inférieur ou égal à un millimètre.

Dans l'exemple illustré, les éléments filiformes 12 sont des fibres optiques classiques destinées à être utilisées par exemple dans un réseau de télécommunication. Les fibres optiques 12 sont fabriquées dans une matière minérale ou synthétique. Une fibre optique de type minéral comprend par exemple un coeur en silice dopée revêtu d'une première gaine minérale et d'une seconde gaine organique comportant couramment deux couches en matière synthétique.

En variante, les éléments filiformes 12 peuvent être constitués de câbles coaxiaux électriques tels que ceux utilisés habituellement dans des installations de télécommunication ou des appareils médicaux.

Le support 10 est destiné à porter de préférence une douzaine d'éléments filiformes 12. Toutefois, le nombre d'éléments filiformes 12 portés par le support peut être inférieur ou supérieur à la douzaine.

Le support 10, de forme générale plane et allongée, comprend des canaux longitudinaux 14 destinés à loger chacun un élément filiforme 12.

Chaque canal 14 est délimité par deux parois longitudinales 18 reliées entre elles par une âme 20. Les parois longitudinales 18 d'un même canal 14 délimitent une ouverture longitudinale 22. La largeur de cette ouverture longitudinale 22 varie par déformation élastique des parois longitudinales 18 entre une configuration d'accès au canal 14, telle que représentée sur la figure 2, autorisant le passage d'un élément filiforme 12 à travers cette ouverture 22, et une configuration de retenue d'un élément filiforme 12 dans le canal 14, telle que représentée sur la figure 1.

Lorsque l'ouverture longitudinale 22 d'un canal 14 est dans la configuration de retenue, l'élément filiforme 12 contenu dans ce canal 14 est retenu transversalement dans ce canal 14 tout en pouvant coulisser longitudinalement dans ce canal 14.

Dans le mode de réalisation illustré sur les figures 1 et 2, les ouvertures longitudinales 22 des canaux successifs 14 débouchent alternativement dans des faces opposées du support 10. Ainsi, les âmes 20 des canaux alternent avec les parois longitudinales 18 de ces canaux de façon à délimiter une section transversale du support 10 en boustrophédon. Plus particulièrement, en considérant la figure 1, on voit que les canaux 14 ont chacun une section transversale sensiblement triangulaire lorsque leur ouverture longitudinale 22 est en configuration de retenue.

L'épaisseur des parois longitudinales 18 et des âmes 20 est de préférence comprise entre 20 et 50 micromètres.

Le support 10 est fabriqué en matière synthétique, de préférence thermoplastique, à l'aide de moyens classiques tels que des moyens d'extrusion de profilés ou des moyens de calandrage.

En considérant à nouveau la figure 1, on voit que le support 10 comprend deux parois longitudinales délimitant chacune un bord latéral de ce support 10. Chaque bord latéral est muni de moyens d'accrochage 24, 26 destinés à coopérer avec des moyens d'accrochage complémentaires portés par un autre support similaire au support 10 illustré sur les figures 1 et 2.

On peut ainsi juxtaposer latéralement deux supports 10 similaires de façon à former un ensemble de supports portant des éléments filiformes 12.

Sur la figure 1, on a représenté un bord latéral du support 10 (à droite en considérant la figure) muni d'un organe femelle d'accrochage 24 destiné à coopérer par encliquetage avec un organe mâle d'accrochage 26 d'un autre support 10, tel que l'organe mâle 26 porté par le bord latéral gauche du support 10 représenté sur la figure 1.

L'invention permet donc de former des faisceaux d'éléments filiformes 12 de faible diamètre inférieur ou égal à un millimètre en reliant ces éléments avec au moins un support 10. Les ouvertures longitudinales 22 des canaux permettent d'accéder visuellement aux éléments filiformes 12 contenus dans ces canaux de façon à voir leur couleur et à les identifier.

Il est facile d'accéder à un élément filiforme 12 particulier en écartant les parois longitudinales 18 du canal 14 dans lequel est logé cet élément filiforme 12. De plus, l'accès à l'ensemble des éléments filiformes 12 peut être facilement réalisé en écartant les bords latéraux du support 10 dans les directions opposées indiquées par les flèches sur la figure 2, de façon à placer toutes les ouvertures longitudinales 22 dans leur configuration d'accès aux canaux 14.

Lorsque les bords latéraux du support 10 ne sont plus sollicités, les ouvertures longitudinales 22 reprennent automatiquement leur configuration de retenue.

Les ouvertures longitudinales 22 permettant un accès visuel à chaque élément filiforme 12, il n'est pas nécessaire que le support 10 soit transparent. Ce support 10 peut donc être de couleur variée ce qui permet de distinguer chaque support 10 dans un ensemble de supports au moyen d'un code de couleur et, le cas échéant de combiner le code de couleur des éléments filiformes 12 avec le code de couleur des supports 10.

La mise en place des éléments filiformes dans les canaux du support peut être effectuée par exemple en introduisant à force les éléments filiformes 12 à travers les ouvertures longitudinales 22 de façon à écarter les parois latérales 18. Cette introduction à force peut être réalisée à l'aide de rouleaux enfonçant les éléments filiformes 12 dans les ouvertures longitudinales 22.

Sur la figure 3, on a représenté un support 10 pour éléments filiformes 12 . Dans ce cas, les ouvertures longitudinales 22 des canaux 14 successifs débouchent dans une même face du support 10.

Les parois longitudinales 18 comportent chacune un bord libre muni d'un bourrelet 28 de retenue des éléments filiformes 12.

De préférence, la face du support dans laquelle débouche les ouvertures longitudinales 22 des canaux 14 est munie d'un couvercle 30 d'obturation des canaux 14.

Parmi les avantages de l'invention, on notera que celle-ci permet de relier des éléments filiformes de faible diamètre tels que des fibres optiques ou des câbles coaxiaux à l'aide de moyens permettant un accès facile à chaque élément filiforme 12.

Les canaux 14 du support ont des dimensions adaptées pour retenir notamment des fibres optiques de type minéral, ayant habituellement un diamètre de 250 micromètres, et de type synthétique, ayant habituellement un diamètre de 500 micromètres.

Le support selon l'invention peut également relier entre eux des câbles coaxiaux ayant des dimensions similaires à celles des fibres optiques évoquées ci-dessus. En règle générale, le support selon l'invention est bien adapté pour relier entre eux des éléments filiformes ayant un diamètre inférieur ou égal à 1 millimètre.

## Revendications

1. Support pour éléments filiformes (12) de faible diamètre inférieur ou égal à 1 millimètre, notamment des fibres optiques et/ou des câbles électriques coaxiaux, comprenant des canaux longitudinaux (14) destinés à loger chacun un élément filiforme (12), chaque canal (14) étant délimité par deux parois longitudinales (18) reliées entre elles par une âme (20) et délimitant une ouverture longitudinale (22) du canal, la largeur de cette ouverture longitudinale (22) variant par déformation élastique des parois longitudinales (18) entre une configuration d'accès au canal (14) autorisant le passage d'un élément filiforme (12) à travers cette ouverture (22), et une configuration de retenue d'un élément filiforme (12) dans le canal (14), **caractérisé en ce que** les ouvertures longitudinales (22) des canaux successifs (14) débouchent alternativement dans des faces opposées du support (10), les âmes (20) des canaux (14) alternant avec les parois longitudinales (18) de ces canaux (14) de façon à délimiter une section transversale du support (10) en boustrophédon.

2. Support selon la revendication 1, **caractérisé en ce que** les canaux longitudinaux (14) ont chacun une section transversale sensiblement triangulaire lorsque leur ouverture longitudinale (22) est en configuration de retenue.

3. Support selon l'une quelconque des revendications 1 à 2, **caractérisé en ce qu'**il est fabriqué dans une matière thermoplastique extrudée ou calandrée.

4. Ensemble d'au moins deux supports chacun selon l'une quelconque des revendications précédentes, **caractérisé en ce que** chaque support (10) comprend une paroi longitudinale (18) délimitant un bord latéral du support munie de moyens d'accrochage (24, 26) destinés à coopérer avec des moyens d'accrochage complémentaires (26, 24) portés par un autre support (10).

5. Ensemble selon la revendication 4, **caractérisé en ce que** les moyens d'accrochage complémentaires (24, 26) des deux supports coopèrent entre eux par encliquetage.

6. Faisceau d'éléments filiformes de faible diamètre inférieur ou égal à 1 millimètre, **caractérisé en ce que** les éléments filiformes (12) sont reliés entre eux par un support (10) selon l'une quelconque des revendications 1 à 3.

7. Faisceau selon la revendication 6, **caractérisé en ce que** les éléments filiformes (12) sont choisis parmi les fibres optiques et les câbles électriques coaxiaux.

## Claims

1. Support for filamentary elements (12) of small diameter less than or equal to 1 millimetre, especially optical fibres and/or coaxial electrical cables, comprising longitudinal channels (14) each intended for accommodating a filamentary element (12), each channel (14) being delimited by two longitudinal walls (18) connected to one another by a web (20) and delimiting a longitudinal opening (22) of the channel, the width of that longitudinal opening (22) varying, as a result of elastic deformation of the longitudinal walls (18), between a configuration of access to the channel (14), which allows passage of a filamentary element (12) through that opening (22), and a configuration retaining a filamentary element (12) in the channel (14), **characterised in that** the longitudinal openings (22) of successive channels (14) open out alternately in opposite faces of the support (10), the webs (20) of the channels (14) alternating with the longitudinal walls (18) of those channels (14) so as to delimit a cross-section of the support (10) in boustrophedon manner.

2. Support according to claim 1, **characterised in that** the longitudinal channels (14) each have a substantially triangular cross-section when their longitudinal opening (22) is in the retaining configuration.

3. Support according to any one of claims 1 to 2, **characterised in that** it is made from an extruded or calendered thermoplastic material.

4. Set of at least two supports each according to any one of the preceding claims, **characterised in that** each support (10) comprises a longitudinal wall (18) which delimits a lateral edge of the support and which is provided with attachment means (24, 26) intended for co-operating with complementary attachment means (26, 24) carried by another support (10).

5. Set according to claim 4, **characterised in that** the complementary attachment means (24, 26) of the two supports co-operate with one another by snapping-in.

6. Bundle of filamentary elements of small diameter less than or equal to 1 millimetre, **characterised in that** the filamentary elements (12) are connected with one another by a support (10) according to any one of claims 1 to 3.

7. Bundle according to claim 6, **characterised in that** the filamentary elements (12) are selected from optical fibres and coaxial electrical cables.

## Patentansprüche

1. Träger für fadenförmige Elemente (12) mit geringem Durchmesser kleiner oder gleich 1 Millimeter, insbesondere für optische Fasern und/oder elektrische Koaxialkabel, umfassend longitudinale Kanäle (14), welche bestimmt sind, jeweils ein fadenförmiges Element (12) aufzunehmen, wobei jeder Kanal (14) durch zwei longitudinale Wände (18), welche miteinander durch einen Steg (20) verbunden sind und eine longitudinale Öffnung (22) des Kanals begrenzen, begrenzt ist, wobei die Größe der longitudinalen Öffnung (22) durch elastische Deformation der longitudinalen Wände (18) zwischen einer Konfiguration des Zugriffs auf den Kanal (14), welche das Hindurchgehen eines fadenförmigen Elements (12) durch diese Öffnung (22) ermöglicht, und einer Konfiguration des Zurückhaltens eines fadenförmigen Elements (12) in dem Kanal (14) variiert, **dadurch gekennzeichnet, dass** die longitudinalen Öffnungen (22) aufeinanderfolgender Kanäle (14) abwechselnd auf gegenüberliegenden Seiten des Trägers (10) münden, wobei die Stege (20) der Kanäle (14) mit den longitudinalen Wänden (18) dieser Kanäle (14) in einer Weise alternieren, um einen Bustrophedonartigen transversalen Querschnitt des Trägers (10) zu begrenzen.

2. Träger gemäß Anspruch 1, **dadurch gekennzeichnet, dass** die longitudinalen Kanäle (14) jeweils einen im Wesentlichen dreieckigen transversalen Querschnitt aufweisen, wenn ihre longitudinale Öffnung (22) in der Konfiguration des Zurückhaltens ist.

3. Träger gemäß einem der Ansprüche 1-2, **dadurch gekennzeichnet, dass** er aus einem extrudierten oder kalandrierten thermoplastischen Material gefertigt ist.

4. Anordnung mindestens zweier Träger, welche jeweils gemäß einem der vorhergehenden Ansprüche ausgestaltet sind, **dadurch gekennzeichnet, dass** jeder Träger (10) eine longitudinale Wand (18) umfasst, welche einen lateralen Rand des Trägers begrenzt, welcher mit Ankopplungsmitteln (24, 26) versehen ist, welche dazu bestimmt sind, mit komplementären Ankopplungsmitteln (26, 24) eines anderen Trägers (10) zusammenzuwirken.

5. Anordnung gemäß Anspruch 4, **dadurch gekennzeichnet, dass** die komplementären Ankopplungsmittel (24, 26) der zwei Träger miteinander durch Einklipsen zusammenwirken.

6. Bündel von fadenförmigen Elementen mit geringem Durchmesser kleiner oder gleich 1 Millimeter, **dadurch gekennzeichnet, dass** die fadenförmigen Elemente (12) miteinander durch einen Träger (10) gemäß einem der Ansprüche 1-3 verbunden sind.

7. Bündel gemäß Anspruch 6, **dadurch gekennzeichnet, dass** die fadenförmigen Elemente (12) ausgewählt sind aus optischen Fasern und elektrischen Koaxialkabeln.
